# EUROPEAN PATENT SPECIFICATION

(11) **EP 0 517 485 B1**
(45) Date of publication and mention of the grant of the patent: **24.04.1996**
(21) Application number: 92305049.6
(22) Date of filing: 02.06.1992
(51) Int. Cl.: A61C 19/06

(54) **Flexible-end irrigation probe**
Bewässerungssonde mit biegsamem Ende
Sonde d'irrigation à extrémité flexible

(30) Priority: 03.06.1991 IL 98355
(43) Date of publication of application: 09.12.1992
(73) Proprietor: Bab, Itai, Karmei Yosef, Ayalon (IL)
(72) Inventor: Bab, Itai, Karmei Yosef, Ayalon (IL)
(74) Representative: Eder, Ephry

(56) References cited:
- DE-U- 8 426 644
- GB-A- 2 237 743
- US-A- 4 512 769
- US-A- 4 575 375
- US-A- 4 787 845
- US-A- 4 973 250

## Description

### Background to the Invention

The present invention relates to a hollow periodontal irrigation probe device for the delivery of any antibiotic/antiseptic or other physiologic and medically compatible solutions into a periodontal pocket or the gingival sulcus.

### Prior Art

The periodontal pocket is a pathologic space formed between the soft gum tissue and tooth root as a result of the destruction of the tooth supporting alveolar bone and periodontal ligament. This space opens to the oral cavity and is populated by pathogenic bacterial species (M.A. Listgarten, J. Periodontal. 47:1-18, 1976). These bacteria cause further destruction of the tooth attachment apparatus leading eventually to tooth loss. Thus, the aim of all curative and preventative periodontal treatments is to arrest the initiation and progression of tissue destruction by removal of the pathogenic flora. Removal of the pathogenic flora from the pockets cannot be achieved by conventional oral hygiene measures which have a limited subgingival effect (P. Kho, F.C. Smales, J.M. Hardie: J. Clin. Periodontol. 12:676-688, 1985). One approach to this problem, widely used over the last decades, has been surgical pocket elimination. This procedure is costly, often results in considerable pain and discomfort and in the long run is characterised by a limited success rate. In mammals, particularly dogs and cats, where periodontal disease is the number one cause of tooth loss (B. Colomery 3d P. Frost, Vet. Clin. North Am. Small Anim. Pract. 16:817-833 1986) the treatment consists of periodical scaling of dental sulcus that involve general anaesthesia and incubation (S.M. Marretta, Semin. Vet. Med. DSurg. Small Anim. 2:230-240 1987). Recently, evidence that control of periodontal disease can be achieved without pocket elimination has been established (S.P. Ramfjord, J. Am. Dent. Assoc. 114:37-40, 1987). One such nonsurgical approach is the local administration into the pocket of antibiotics and antiseptics alone or in combination with mechanical debridement of the pocket. The simplest technique for such administration is repeated subgingival irrigation using the respective solutions. This is done using a delivery device equipped with a conventional blunt, rigid metal needle (L.L. Soh, H.N. Newman, J.d. Strahan, J. Clin. Periodontal. 9:66-74, 1982; J.G.L. Khoo, H.N. Newman, J. Periodont. Res. 18:607-619, 1983). Other delivery devices that might be used are disclosed in US-A-4575375 and GB-A-2237743. With these types of needle the device is operated effectively only by trained personnel. To avoid the risk of traumatising the soft tissue pocket wall and epithelial attachment as well as the discomfort involved in tooth sensitivity resulting from the contact of the root by the needle (particularly where a metal needle is employed), the self-administered (by the patient) use is limited to buccal aspects of single-rooted teeth which constitute relatively accessible sites (L. Braatz S. Garret, N. Claffey, J. Eglelberg, J. Clin. Periodontol. 12:630-638, 1985). This limitation on patient-administered irrigation of antibacterial solutions results from the needle rigidness and associated traumatising potential as well as the use of only one form of bending.

The present invention therefore aims to provide a delivery device providing an atraumatic probe with a non-metallic end of appropriate shape and dimensions whereby it can be readily located by a non-specialist to provide subgingival irrigation in mammals.

### Brief Description of the Invention

According to the present invention there is provided a hollow periodontal irrigation probe device for the delivery of physiologic and/or medical solution into a periodontal pocket in a mammal, the probe device comprising a rigid hollow arm having a proximal connection hub and extending from the arm's distal end, a short hollow flexible plastic element with a blunt round tip, wherein said flexible plastic element is fixed to the rigid arm, wherein the probe lumen opens at the centre of the tip or laterally at some distance from the tip, and wherein said flexible element has a uniform external dimension.

### Brief Description of the Figures

- Figure 1: illustrates examples of flexible-end periodontal irrigation probes according to the present invention.
- Figure 2: illustrates a longitudinal section of the flexible end.
- Figure 3: illustrates a cross-section of the probe according to the invention at the point at which the flexible end is inserted into the rigid arm.

### Detailed Description of the Drawings

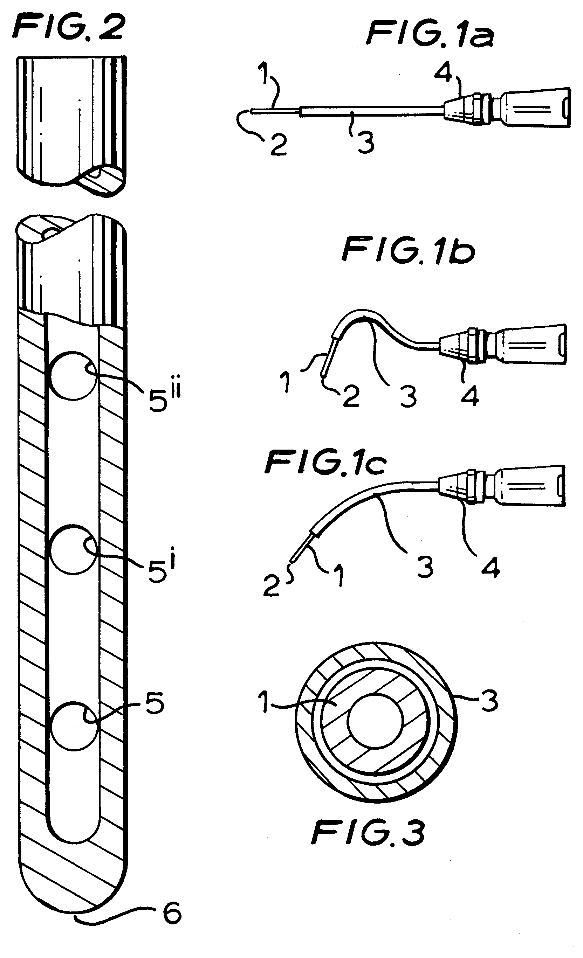

Figs. 1a, 1b and 1c, are side views of devices according to said invention.
Fig. 1a illustrates a device with a straight probe.
Figs. 1b and 1c illustrates devices with bent probes.
The short flexible plastic, element (1) with a blunt round tip (2) is fixed to the rigid metal or plastic arm (3) with a proximal connection hub (4).
Fig. 2 illustrates the longitudinal section of a flexible element wherein the probe lumen opens laterally as multiple holes (5) (5ⁱ) (5ⁱⁱ) 2-6mm proximal to the tip (6).

Fig. 3 illustrates a cross-section of a device according to the present invention wherein the flexible tip tube (7) is inserted into the rigid arm (3).

The illustrated embodiments of the present invention show a hollow irrigation probe consisting of two parts:
(i) a rigid, straight or bent, metal or plastic arm with a proximal connection hub such as a luer lock or luer connection or threaded hub or other connection element;
(ii) a short, flexible plastic element provided at its distal end with a blunt tapered or round tip. Said flexible part is fixed to the arm by means such as chemical bonding, glue, welding, insert molding or plasma etching or a mechanical lock. The probe lumen opens at the centre of the tip of laterally at some distance from the tip. The probe according to the present invention constitutes the end of pumping devices reaching the patient's body engineered for the delivery or antibiotic/antiseptic or other physiologic and medically compatible solutions. These devices include different manual and automatic syringes, spray injectors and mechanically/electrically driven pump systems. Said flexible-end part is designed for the atraumatic non-sensitising penetration into the gingival sulcus/periodontal pockets. The rigid arm enforces the flexible end into the space between the gum and tooth. It is possible to design multiple arm shapes (and sizes) to facilitate accessibility to various teeth and tooth aspects. The new probe according to said invention is designed for use by professional and non-professional personnel including patient self treatment.

The illustrated flexible-end periodontal irrigation probe is a hollow device consisting of a 20-150mm long rigid arm and 2-8mm long flexible distal end part. A connection part such as a luer lock or luer connection or threaded hub or other construction element constitutes the proximal arm end. The arm is straight or bent as illustrated in Fig 1.

The arm is made of either metallic or a rigid plastic material. The flexible element is made of flexible or semi-flexible nylon or polyethylene or copolymer or polypropylene or PVC or teflon or polyamide or any other suitable plastic material, with a degree of hardness of Shore A 55-100. The proximal hub is made of stainless steel or aluminum or polypropylene or polyethylene or any other suitable plastic material. The arm inner diameter is 14-25 gauge. The flexible element's external diameter is uniform and of 18-27 gauge (see Fig. 2). Depending on the combination of materials, fixation of the flexible element to the arm is achieved by insertion of an extended end tube through the arm and hub (using the arm as a sleeve) (Figure 1) and immobilising it by means such as an adhesive, chemical bonding, plasma etching, welding, insert molding or mechanical lock. Alternatively, similar means can be used for the connection of the flexible element tube to the distal end of the arm, thus joining together the end lumens of the rigid arm and flexible element. The short flexible plastic element can be replaced and the new flexible element can be fitted and inserted to the rigid arm and then fixed to the rigid arm by any conventional mechanical lock. The flexible element has a blunt, rounded, atraumatic tip. The lumen opens at the centre of the tip or laterally as a single hole or as multiple holes 2-6mm proximal to the tip. The hole (holes) is (are) round, "fish eye" or-any other form. In instances of multiple holes they will open to different directions at different distances from the tip.

The illustrated probes may be utilised for treatment of a pathologic space formed between the soft gum tissue and tooth root (a periodontal pocket) by directing the rigid arm to enforce the flexible end into the space between the gum and tooth a pumping device such as a manual or automatic syringe delivering an antibiotic/antiseptic or other physiologic and medically compatible solution to the periodontal pocket through the probe device.

## Claims

1. A hollow periodontal irrigation probe device for the delivery of physiologic and/or medical solution into a periodontal pocket in a mammal, the probe device comprising a rigid hollow arm (3) having a proximal connection hub (4) and extending from the arm's distal end, a short hollow flexible plastic element with a blunt round tip, wherein said flexible plastic element (1) is fixed to the rigid arm (3), wherein the probe lumen opens at the centre of the tip or laterally at some distance from the tip, and wherein said flexible element has a uniform external dimension.

2. A hollow irrigation probe device according to Claim 1, wherein the rigid arm (3) is a rigid straight or bent metal or plastic arm.

3. A hollow irrigation probe device according to Claim 1 or Claim 2, wherein the proximal connection hub (4) is a luer lock or luer connection or a threaded attachment or other forms of connection element.

4. A hollow irrigation probe device according to any preceding claim, wherein the short flexible plastic element (1) is fixed to the rigid arm (3) by chemical bonding, or glue, or welding, or insert molding, or plasma etching or a mechanical locking.

5. A hollow irrigation probe device according to any one of Claims 1 to 3, wherein the short flexible plastic element (1) can be replaced and the dew element (1) can be fitted and inserted into the rigid arm (3) and then fixed to the rigid arm (3) by any conventional mechanical lock.

6. A hollow irrigation probe device according to any preceding claim, wherein the rigid arm (3) is 20-150mm long and the flexible element (1) is 2-8mm long.

7. A hollow irrigation probe device according to any preceding claim, wherein the flexible element (1) is made of flexible or semi-flexible nylon or polyethylene or copolymer, or polypropylene or polyvinyl chloride or teflon, or polyamide or another suitable plastic material.

8. A hollow irrigation probe device according to any preceding claim, wherein the proximal hub (4) is made of stainless steel or aluminum or polypropylene or polyethylene or another suitable plastic material.

9. A hollow irrigation probe device according to any preceding claim, wherein the rigid arm's inner diameter is 14-25 gauge and the flexible element's external diameter is 18-27 gauge.

10. A hollow irrigation probe device according to anyone of Claims 1 to 9, wherein the lumen opens at the centre of the rounded blunt tip.

11. A hollow irrigation probe device according to any one of Claims 1 to 9, wherein the lumen opens laterally as a single hole.

12. A hollow irrigation probe device according to any one of Claims 1 to 9, wherein the lumen opens laterally as multiple holes 2-6mm proximal to the tip and wherein said multiple holes open to different directions at different distances from the tip.

## Patentansprüche

1. Hohle Sondenvorrichtung zur paradontalen Spülung, geeignet für das Einleiten einer physiologischen und/oder medizinischen Lösung in eine Zahnfleischtasche eines Säugetiers, wobei die Sondenvorrichtung einen steifen Hohlarm (3) mit einer proximalen Verbindungsnabe (4) und ein sich vom distalen Ende des Arms erstreckendes kurzes, hohles, flexibles Kunststoffelement mit einer stumpfen, runden Spitze aufweist, wobei das flexible Kunststoffelement (1) am steifen Arm (3) befestigt ist, das Lumen der Sonde sich in der Mitte der Spitze oder seitlich in einiger Entfernung von der Spitze öffnet und das flexible Element eine gleichmäßige äußere Ausdehnung hat.

2. Hohle Spülsondenvorrichtung nach Anspruch 1, dadurch gekennzeichnet, daß der steife Arm (3) ein steifer gerader oder gekrümmter Metall- oder Kunststoffarm ist.

3. Hohle Spülsondenvorrichtung nach Anspruch 1 oder 2, dadurch gekennzeichnet, daß die proximale Verbindungsnabe (4) eine Luer-Arretierung oder Luer-Verbindung oder eine Gewindenabe oder ein anderes Verbindungselement ist.

4. Hohle Spülsondenvorrichtung nach einem der Ansprüche 1 bis 3, dadurch gekennzeichnet, daß das kurze, flexible Kunststoffelement (1) am steifen Arm (3) durch eine chemische Bindung oder Leim oder Verschweißen oder Formung eines Einsatzes oder Plasmaätzen oder eine mechanische Arretierung befestigt ist.

5. Hohle Spülsondenvorrichtung nach einem der Ansprüche 1 bis 3, dadurch gekennzeichnet, daß das kurze, flexible Kunststoffelement (1) ersetzbar ist und das neue Element (1) in den steifen Arm (3) einsetzbar und einführbar und dann am steifen Arm (3) durch eine beliebige herkömmliche mechanische Arretierung anschließbar ist.

6. Hohle Spülsondenvorrichtung nach einem der Ansprüche 1 bis 5, dadurch gekennzeichnet, daß der steife Arm (3) eine Länge von 20 bis 150 mm und das flexible Element (1) eine Länge von 2 bis 8 mm hat.

7. Hohle Spülsondenvorrichtung nach einem der Ansprüche 1 bis 6, dadurch gekennzeichnet, daß das flexible Element (1) aus flexiblem oder halbflexiblem Nylon oder Polyethylen oder Kopolymer oder Polypropylen oder Polyvinylchlorid oder Teflon oder Polyamid oder einem anderen geeigneten Kunststoff besteht.

8. Hohle Spülsondenvorrichtung nach einem der Ansprüche 1 bis 7, dadurch gekennzeichnet, daß die proximale Nabe (4) aus rostfreiem Stahl oder Aluminium oder Polypropylen oder Polyethylen oder einem anderen geeigneten Kunststoff besteht.

9. Hohle Spülsondenvorrichtung nach einem der Ansprüche 1 bis 8, dadurch gekennzeichnet, daß der Innendurchmesser des steifen Arms ein Kaliber zwischen 14 und 25 und der Außendurchmesser des flexiblen Elements ein Kaliber zwischen 18 und 27 hat.

10. Hohle Spülsondenvorrichtung nach einem der Ansprüche 1 bis 9, dadurch gekennzeichnet, daß sich das Lumen in der Mitte der abgerundeten, stumpfen Spitze öffnet.

11. Hohle Spülsondenvorrichtung nach einem der Ansprüche 1 bis 9, dadurch gekennzeichnet, daß sich das Lumen seitlich in einem einzelnen Loch öffnet.

12. Hohle Spülsondenvorrichtung nach einem der Ansprüche 1 bis 9, dadurch gekennzeichnet, daß sich das Lumen seitlich in mehreren Löchern, die sich in Abständen von 2-6 mm von der Spitze befinden, öffnet und sich die Löcher in unterschiedlichen Richtungen in unterschiedlichen Abständen von der Spitze öffnen.

## Revendications

1. Dispositif de sonde d'irrigation périodontale creuse pour la distribution de solution physiologique et/ou médicale dans une poche périodontale dans un mammifère, le dispositif de sonde comprenant un bras creux rigide (3), ayant un moyeu de raccordement proximal (4) et, s'étendant à partir de l'extrémité distale du bras, un élément en matière plastique flexible, creux, court, ayant une pointe arrondie, émoussée, ledit élément (1) en matière plastique flexible étant fixé au bras rigide (3), le passage de la sonde s'ouvrant au centre de la pointe ou latéralement à une distance de la pointe, et ledit élément flexible ayant une dimension externe uniforme.

2. Dispositif de sonde d'irrigation creuse selon la revendication 1, dans lequel le bras rigide (3) est un bras en métal ou en matière plastique, rectiligne ou courbe, rigide.

3. Dispositif de sonde d'irrigation creuse selon la revendication 1 ou la revendication 2, dans lequel le moyeu de raccordement proximal (4) est un organe de verrouillage Luer ou un raccord Luer ou un organe de fixation fileté ou autres formes d'élément de raccordement.

4. Dispositif de sonde d'irrigation creuse selon l'une quelconque des revendications précédentes, dans lequel l'élément (1) en matière plastique flexible, court, est fixé au bras rigide (3) par liaison chimique, ou avec de la colle, ou par un soudage, ou un surmoulage, ou une attaque au plasma ou par un verrouillage mécanique.

5. Dispositif de sonde d'irrigation creuse selon l'une quelconque des revendications 1 à 3, dans lequel l'élément (1) en matière plastique flexible, court, peut être remplacé, et le nouvel élément (1) peut être adapté et introduit dans le bras rigide (3), puis fixé au bras rigide (3) par tout organe de verrouillage mécanique classique.

6. Dispositif de sonde d'irrigation creuse selon l'une quelconque des revendications précédentes, dans lequel le bras rigide (3) a une longueur de 20-150 mm, et l'élément flexible (1) a une longueur de 2-8 mm.

7. Dispositif de sonde d'irrigation creuse selon l'une quelconque des revendications précédentes, dans lequel l'élément flexible (1) est fait de Nylon ou polyéthylène ou copolymère, ou polypropylène ou poly(chlorure de vinyle) ou Téflon ou polyamide ou une autre matière plastique appropriée, flexible ou semi-flexible.

8. Dispositif de sonde d'irrigation creuse selon l'une quelconque des revendications précédentes, dans lequel le moyeu proximal (4) est fait d'acier inoxydable ou d'aluminium ou de polypropylène ou de polyéthylène ou d'une autre matière plastique appropriée.

9. Dispositif de sonde d'irrigation creuse selon l'une quelconque des revendications précédentes, dans lequel le diamètre interne du bras rigide est de calibre 14-25, et le diamètre externe de l'élément flexible est de calibre 18-27.

10. Dispositif de sonde d'irrigation creuse selon l'une quelconque des revendications 1 à 9, dans lequel le passage s'ouvre au centre de la pointe émoussée, arrondie.

11. Dispositif de sonde d'irrigation creuse selon l'une quelconque des revendications 1 à 9, dans lequel le passage s'ouvre latéralement sous la forme d'un trou unique.

12. Dispositif de sonde d'irrigation creuse selon l'une quelconque des revendications 1 à 9, dans lequel le passage s'ouvre latéralement sous la forme de trous multiples, placés à 2-6 mm de la pointe, et dans lequel lesdits trous multiples s'ouvrent vers différentes directions à différentes distances de la pointe.
